# EUROPEAN PATENT APPLICATION

(11) **EP 2 568 554 A1**
(43) Date of publication of application: **13.03.2013**
(21) Application number: 11460047.1
(22) Date of filing: 12.09.2011
(51) Int. Cl.: H02G 5/02, H02B 13/035

(54) **An integrated support for fixing electrical buses**

(71) Applicant: ABB Technology AG, 8050 Zürich (CH)
(72) Inventor: Bednarowski, Dariusz, 31-952 Krakow (PL); Malinowski, Lukasz, 30-079 Krakow (PL); Mlot, Michal, Krakow (PL); Corti, Davide, 24027 Nembro, Bergamo (IT); Mattozzi, Alessandro, 17240 Sundbyberg (SE)
(74) Representative: Chochorowska-Winiarska, Krystyna

(57) **Abstract**

The invention relates to an integrated support for fixing electrical buses in medium-voltage distribution switchgear. The support incorporates a base (1) with areas for fixing the support to a wall of the casing of a medium-voltage distribution switchgear, at least three tubular parts (2) forming a cover (3) for the buses and extending from the base (1), each tubular part with an internal and longitudinally extending phase compartment (2a), and a shelf (4) which is common for all tubular parts (2) and which connects all tubular parts (2) with one another at a predetermined distance from the base (1). On one side the shelf (4) has fixing surfaces (4a) with ports for bolts for fixing the buses. On the other side of the shelf (4) between the phase compartments (2a) partition walls (5) are formed. The support is made of a thermoplastic material by the injection molding method or injection molding with pressing or forming. All walls present in the support structure are less than 6 mm thick. The support production cycle lasts from a few seconds to several dozen seconds.

## Description

The invention relates to an integrated support to be used especially in three-phase medium-voltage distribution switchgear as a fixing unit for three electrical buses.

There are known various supports used as units for fixing electrical buses to a wall of a medium-voltage distribution switchgear casing. Such supports are made of an electrically non-conducting material.

One of the known supports is a single-phase electrical bus support. Such support has a base, a cylindrical part and a shelf to which the bus is fixed. In the base there are sealed four threaded inserts into which four bolts fixing the support to the wall of a medium-voltage distribution switchgear casing are screwed. For this design of the support, at least three such supports or their multiple have to be used in the medium-voltage distribution switchgear. That requires the use of at least twelve threaded inserts and at least twelve fixing bolts, and each bus is fixed to the fixing surface of a separate shelf. The use of this known support enforces the use of a larger number of components, which increases the manufacturing and installation costs of a complete support as well as the logistic costs connected with its transport and storage. This known support is made of epoxy resin.

There is also known an integrated electrical buses support of a design that constitutes a combination of three single-phase supports. This support has a base that is common for three cylindrical parts which are also partly connected at an incomplete height by means of a rib, and three separate shelves. In a support of such design, the minimum number of threaded inserts and bolts fixing the base to the wall of the casing of a three-phase medium-voltage distribution switchgear is eight, and the buses of the three phases are fixed to the fixing surfaces of three separate shelves. This integrated support has a decreased mechanical strength due to the use of the rib connecting individual cylindrical parts, which is the weak point of the design, and it has widely diverse mechanical strength resulting from the heterogeneity of the material and casting defects occurring in the manufacturing process. This known integrated support for electrical buses is made of epoxy or polyester resin.

For a long time known supports have been made of electrically non-conducting materials such as thermosetting materials which have good insulating and mechanical properties, but which require an additional stage of curing in the production process. After the stage of pouring epoxy or polyester resin into the mold form and after its pre-hardening in the mold, there follows a long-lasting stage of post-curing conducted in ovens in high temperatures. The production of a support from thermosetting materials requires longer times of the production cycle. The full production cycle for an epoxy resin product, in this case a support, takes from a dozen or so minutes to more than a dozen hours. When epoxy resin products are cast, the production process is multi-stage and requires a large quantity of equipment and additional operation by the operator. In addition, thermosetting materials have limited capabilities of being reused i.e. recycled. That is why the production process for a thermosetting material product is long and costly, which results in a high price of the product, in this case an electrical buses support.

Moreover, in the case of products made from thermosetting materials, including from epoxy resins, typically there is a wide diversity of mechanical strength resulting from the heterogeneity of the material and casting defects occurring in the manufacturing process. The cracking or breaking strength of products made of thermosetting materials is within a wide range, even as much as 10 to 20% as, by way of example, in high voltage insulators. That is the reason why the presently known supports made of thermosetting materials are marked by poor mechanical strength and consequently unsatisfactory reliability and short life.

The purpose of the invention is to develop an integrated support of improved design, with a smaller number of components to simplify the installation of the complete support and to reduce logistic costs connected with its transport and storage, preferably and especially for applications in three-phase medium-voltage switchgear as a fixing unit for three buses.

Another purpose of the invention is to develop an integrated support of improved design which would guarantee high mechanical strength, operational reliability and long life.

Still another purpose of the invention is to obtain an integrated support that can be made in a short and simplified production cycle.

And lastly, a purpose of the invention is to obtain an integrated support that will be inexpensive and easy in operation and maintenance.

The integrated support according to the invention for fixing buses in medium-voltage distribution switchgear is characterized by the fact that it contains:
a base with areas for fixing the support to the wall of the casing of a medium-voltage distribution switchgear,
at least three tubular parts extending from the base and forming a cover for buses, each tubular part with an internal and extending longitudinally phase compartment for one of the current phases, and
a common shelf for all tubular parts and connecting all the tubular parts with one another at a predetermined distance from the base, while
on one side, the one that is more distant from the base, the shelf has fixing surfaces, one in each tubular part, with ports for the bolts for fixing the buses and on the other side of the shelf, the one closer to the base, between the phase compartments, partition walls are formed.

Preferably, the cover comprises three tubular parts which extend perpendicularly to the base.

Preferably, the base has a rectangular contour in top view, and the tubular parts are arranged in a line one after the other along the longer side of the base, each tubular part having, on a part of its circumference and along the longer side of the base, a hole extending from the upper edge of the tubular part towards the base to the shelf fixing area, forming partly open parts of upper phase compartments, and below the holes in the tubular parts the cover has a flat wall extending to the base and between the tubular parts.

Preferably, on the side opposite the holes in the tubular parts and below the shelf, the cover has a flat wall extending to the base between the tubular parts, which wall joins the tubular parts.

Preferably, in cross-section, a tubular part has a basically circular contour.

Preferably, to increase rigidity and mechanical strength, the shelf has, preferably on the side closer to the base, reinforcing elements, preferably ribbing.

Preferably, in the areas of fixing to the wall of the casing of a medium-voltage distribution switchgear, the base has ports for fixing bolts.

Preferably, to increase rigidity and mechanical strength, in the areas of fixing to the wall of the casing of a medium-voltage distribution switchgear, the base has reinforcing elements, preferably ribbing.

Preferably, the support has threaded inserts in the shelf holes and/or in the base holes.

Preferably, the support is made of a thermoplastic material, preferably reinforced with fiber or non-filled, such as PA, PPA, PET, PBT, PPS or PES, more preferably selected from a group of thermoplastic materials of a higher mechanical strength.

Preferably, the support is produced using the injection molding method or injection molding with pressing..

Preferably, the support is produced in a single manufacturing stage.

Preferably, the support production cycle lasts from a few seconds to several dozen seconds.

Preferably, all walls present in the support structure are less than 6 mm thick.

An advantage of the invention is that the structure of this integrated support ensures its very high rigidity and mechanical strength, i.e. long service life which in turn results in a long time of operation and a considerable reduction in the number of failures caused by damage to the support.

Another advantage of the invention is that the structure of the integrated support makes it possible to use a thermoplastic material to produce the support, which additionally contributes to the increase in its rigidity and mechanical strength compared to known supports, and at the same time it significantly simplifies the support production process and reduces the costs of its production.

The integrated electrical buses support is characterized by a very high functional reliability.

Problems connected with the need to service this unit for fixing buses in medium voltage switchgear have been reduced or eliminated.

An advantage of the integrated support according to the invention is also that its design and the thermoplastic materials used in its production process as well as the method of injection molding or injection molding with pressing allow to shorten the production cycle to the time of a few seconds or a few dozen seconds.

Still another advantage of the invention is that the integrated support made of thermoplastic material has small mass which means that CO₂ emission has been significantly reduced in its production process as well as during its future transport.

The developed support makes it possible to significantly reduce the costs of manufacture, operation and recycling, while at the same time ensuring the use of environment-friendly methods.

All technical aims have been achieved in the integrated support according to the invention presented in w fig. 1 through 7 and described below in detail in preferred embodiments.

The subject of the invention in its preferred embodiments is presented in the drawing, where:
fig. 1 shows general front, top and side perspective views of the integrated support according to the invention, intended for fixing three buses in a three-phase medium-voltage distribution switchgear,
fig. 2 shows general rear, top and side views of the support from fig. 1,
fig. 3 shows a bottom view of the first preferred embodiment of the integrated support according to the invention, for a three-phase medium-voltage distribution switchgear,
fig. 4 shows a cross-section along the line A-A of the support from fig. 3,
fig. 5 shows a bottom view of the second preferred embodiment of the integrated support, according to the invention, intended for fixing three buses in a three-phase medium-voltage distribution switchgear,
fig. 6 shows a front view of the support both from fig. 5 and from fig. 3, and
fig. 7 shows a top view of the support both from fig. 5 and from fig. 3.

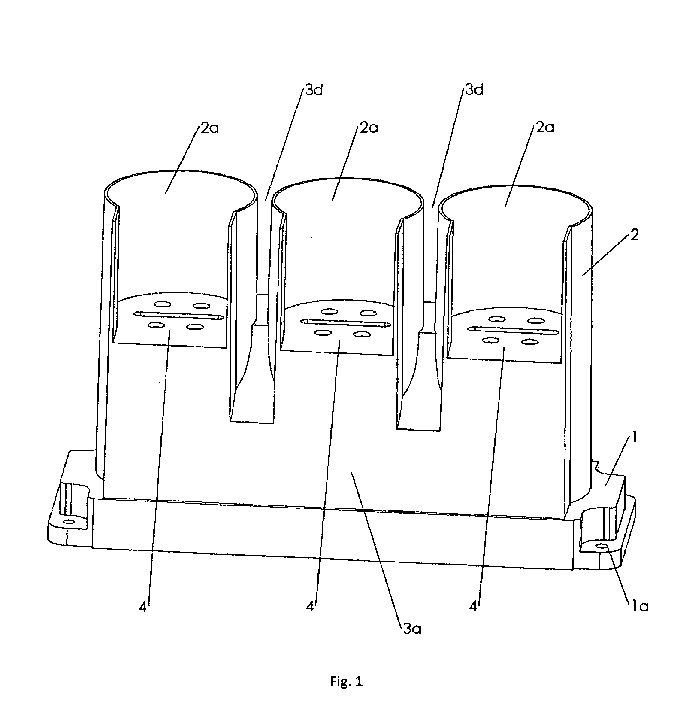

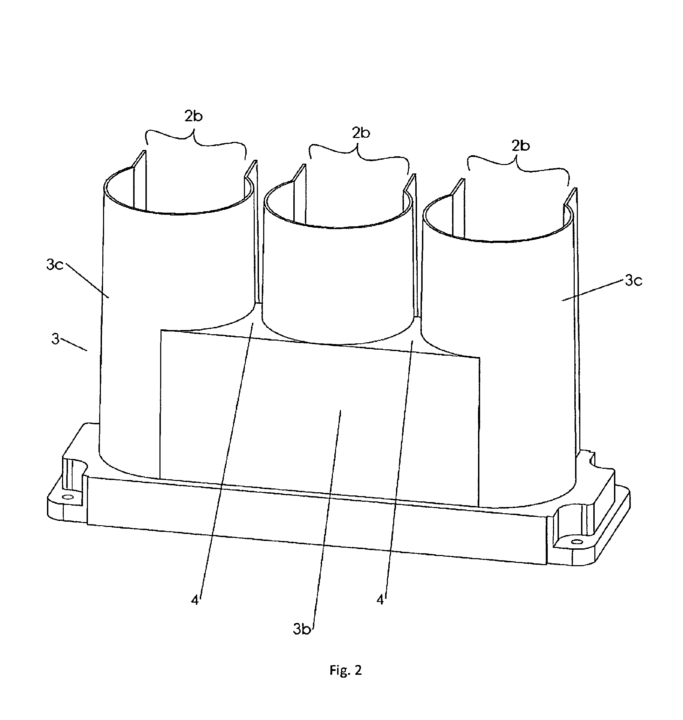

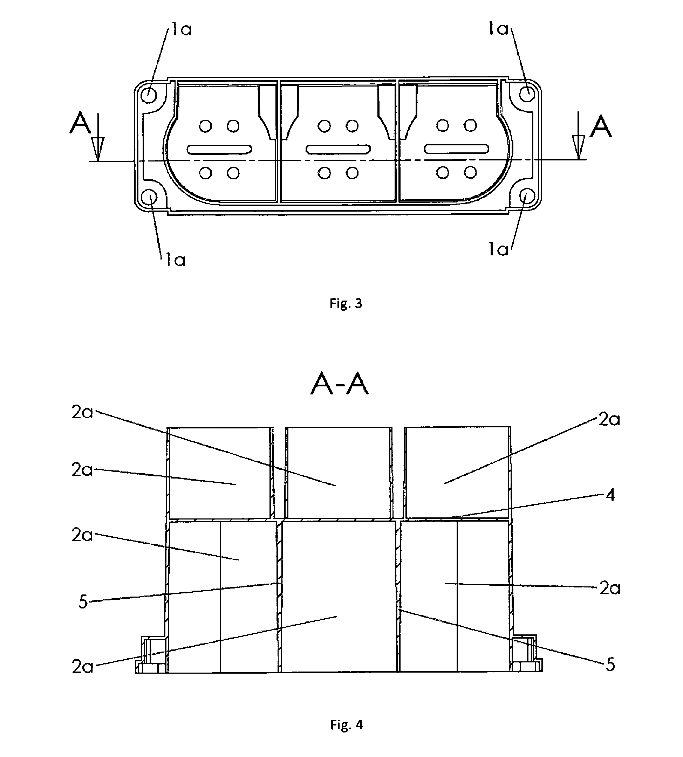

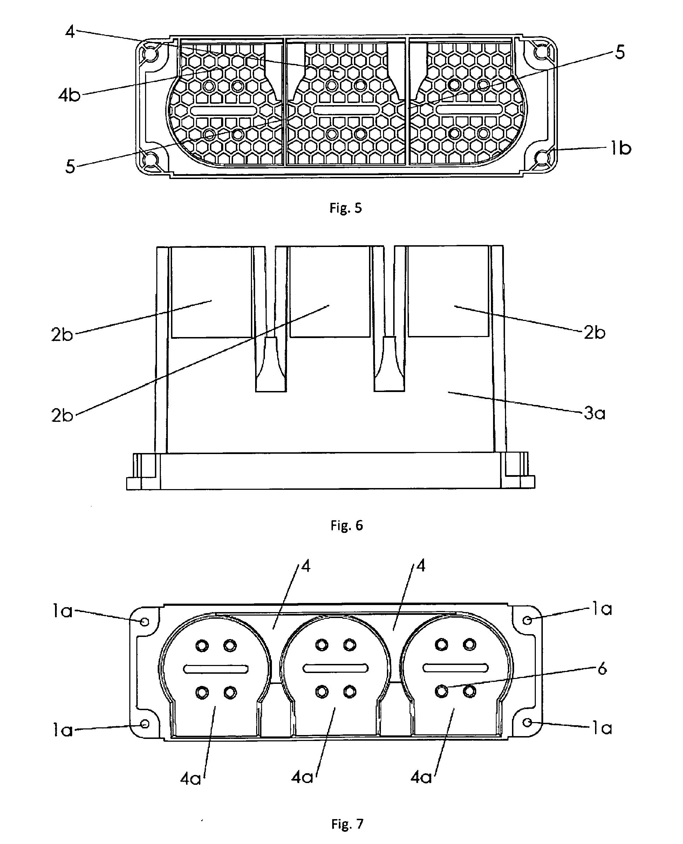

In figures 1 and 2 there is shown in general the integrated support according to the invention, which is intended for fixing three electrical buses in a three-phase medium-voltage distribution switchgear. The first embodiment of the integrated support according to the invention, functioning together with a three-phase medium-voltage distribution switchgear, is presented in fig. 3 and 4, and the second embodiment of the support, also functioning together with a three-phase medium-voltage distribution switchgear, is presented in fig. 5-7.

The integrated support which is the subject of the present invention and which is shown in two preferred embodiments is a fixing unit for three buses, each for one of the phases of a three-phase medium-voltage distribution switchgear.

The support is comprised of a base 1, three tubular parts 2 extending perpendicularly from the base 1 and forming a cover 3 for buses, and a shelf 4 which is common for the three tubular parts 2 and which joins the three tubular parts 2 with one another at a predetermined distance from the base 1.

In the preferred embodiments of the integrated support according to the invention, described above, each tubular part 2 has a basically circular contour in cross-section i.e. it has the form of a partly cylindrical part, which can be seen in the enclosed fig. 1-7 of the drawing.

In top view, the base 1 has a basically rectangular contour, as shown in fig. 7, and the tubular parts 2 of the cover 3 are arranged in a line one after the other along the longer side of the base 1 and they protrude at right angle from the base 1 to a certain preset height.

Each tubular part 2 of the cover 3 has an internal phase compartment 2a for one of the phases, extending along the tubular part 2.

The shelf 4 is formed at a predetermined distance from the base 1 between the three tubular parts 2 joining them with one another at a selected place or at a selected level of their height, as shown, for instance, in fig. 4. The shelf 4 divides each tubular part 2 and each of the three phase compartments 2a into an upper part and a bottom part of the tubular part 2 and the phase compartment 2a, respectively. Each of the three tubular parts 2 is open at the top, and at the bottom of its upper part is closed by the shelf 4.

One of the buses of the three phases of a three-phase medium-voltage distribution switchgear is introduced into the upper part of the phase compartment 2a of each tubular part 2 of the cover 3. Between the bottom parts of the phase compartments 2a of the three tubular parts 2, the cover 3 of the support has partition walls 5.

On one side, the one that is more distant from the base 1, the shelf 4 has three fixing surfaces 4a, one in each tubular part 2. In each fixing surface 4a there are ports for bolts for fixing buses as shown in fig. 1, 3 and fig. 5 and 7. On the other side of the shelf 4, the one closer to the base 1, between the phase compartments 2a of the tubular parts 2 of the cover 3, there are formed, as mentioned above, partition walls 5 which reinforce the structure of the integrated support according to the invention. Each of the three fixing surfaces 4a of the shelf 4 forms the bottom of the upper part of the corresponding phase compartment 2a.

Three buses, each constituting one of the three phases, are fixed to the three fixing surfaces 4a of the shelf 4 by means of fixing bolts screwed into holes. Depending on the requirements or circumstances, threaded metal inserts 6 can be placed in the holes of the shelf 4.

On the outside of the tubular parts 2, the shelf 4 is a connecting strip extending parallel to the base 1 between the tubular parts 2.

Due to the use of the shelf 4 common for all phases, the integrated support according to the present invention features high mechanical strength during a Short Time withstand Current test compared with known supports which have non-integrated shelves separate for each of their cylindrical parts.

Each of the tubular parts 2 of the cover 3 has a hole 2b on a part of its circumference and along the longer side of the base 1. The hole 2b extends from the upper edge of the tubular part 2 towards the base 1 to the fixing surface 4a of the shelf 4 forming partly open, i.e. on the side of the longer side of the base 1, upper parts of the phase compartments 2a. In the embodiments of the integrated support according to the invention with the three tubular parts 2 of the cover 3 arranged in a line one after the other, shown in fig. 1-7, we have two extreme tubular parts 2 and between them one central tubular part 2 and, respectively, two extreme holes 2b and between them one central hole 2b formed in the central tubular part 2.

Below the holes 2b of the tubular parts 2, the cover 3 has a flat wall extending to the base 1 and between the tubular parts 2 along the longer side of the base 1. In the embodiments of the integrated support according to the invention, shown in fig. 1-7, the flat wall is the front wall 3a of the cover 3.

On the other side of the cover 3, that is the side opposite the holes 2b of the tubular parts 2 and below the shelf 4, the cover 3 has a flat wall extending to the base 1 and between the tubular parts 2 along the other longer side of the base 1. This flat wall joins the tubular parts 2. In the embodiments of the integrated support according to the invention, shown in fig. 1-7, this flat wall is the rear wall 3b of the cover 3. The rear wall 3b of the cover 3 has a rectangular contour.

The side walls 3c of the cover 3 are the outer sides of the extreme tubular parts 2. In preferred embodiments of the support, described and shown here and having tubular parts 2 in the form of basically cylindrical parts, the side walls 3c have the shape of a fragment of a cylinder.

Between the tubular parts 2, at a part of the height of the cover 3, the cover 3 has ports 3d extending from the upper edges of the tubular parts 2 longitudinally towards the base 1 and overlapping, on the front wall 3a, the fixing surfaces 4a of the shelf 4, forming clearances between the upper parts of the tubular parts 2, which clearances are at their bottom bent towards the base 1 and towards the front to the front wall 3a of the cover of the integrated support.

The base 1 has four areas of fixing of the support to the wall of the casing of a three-phase medium-voltage distribution switchgear, which is made of sheet metal. In the fixing areas, the base 1 has formed ports for fixing bolts. In this way, the base 1 has four fixing points 1a for securing the support in the wall of the casing of a three-phase medium-voltage distribution switchgear. For this purpose, self-tapping bolts which are screwed directly in the material of the plastic applied in the support, or metric bolts are used as fixing bolts. In a case where metric bolts are used as the fixing bolts, it is necessary to use additional threaded metal inserts 6, which are overmolded during the main production stage of the integrated support or which are installed later in an additional stage of the manufacturing process i.e., preferably, they are pressed in or screwed in.

Therefore, as in the holes in the shelf 4, also in the holes in the fixing areas of the base 1 there can be placed threaded metal inserts 6 forming four fixing points 1a. The use of threaded metal inserts 6 prevents slackening of the created bolted joints over a long operating period of the integrated support.

The shelf 4 in the basic variety of the embodiment of the integrated surfaces 4a for fixing buses has the form of a flat shelf without any reinforcing elements on its upper or bottom surface, as can be seen in fig. 3 and 4 showing the first preferred embodiment of the support.

However, in order to increase rigidity and mechanical strength, of both the shelf 4 itself and of the whole support, the shelf 4 can have reinforcing elements, e.g. in the form of ribbing 4b, on its upper and/or bottom surfaces. Fig. 5 illustrates the shelf 4 of the integrated support in the second embodiment with the ribbing 4b formed on the bottom surface of the shelf 4, that is on that side of the shelf 4 which is closer to the base 1.

Similarly, the base 1 in the areas where the support is fixed to the wall of the casing of a three-phase medium-voltage distribution switchgear can have reinforcing elements, preferably in the form of ribbing 1b, as in the second embodiment of the support, see fig. 5. The ribbing, respectively, 4b or 1b, of the shelf 4 or of the fixing areas of the base 1 can be of various pattern or shape depending on specific needs, requirements or the applied material of the support.

The use of the reinforcing elements in the shelf 4 and the base 1 also allows to reduce the amount of material necessary to make the support and hence to reduce the weight of the integrated support while at the same time ensuring its required rigidity and mechanical strength.

All walls or partitions of the integrated support according to the present invention have a thickness of less than 6 mm.

The integrated support, according to the invention, is preferably made of a thermoplastic material which till now has not been used in the manufacturing of known supports. Preferably, the integrated support, according to the invention, is made of any thermoplastic material including preferably of a thermoplastic material reinforced with fibers or unfilled, such as PA, PPA, PET, PBT, PPS or PES. If a thermoplastic material from a group of higher mechanical strength is selected for the support, then the result will be an integrated support of especially high mechanical strength, significantly higher than the mechanical strength of the known supports. At the same time, the amount of material used to produce the support according to the invention will be reduced similarly to its weight.

For comparison, in the case of products made of thermosetting materials, for example epoxy resins, the obtained heterogeneity of material is so great that it has an adverse influence on the mechanical properties of such products. For instance, in high voltage insulators, cracking or breaking strength is within the range of 10-20%. For similar products made of thermoplastic materials the difference in the cracking or breaking strength ranges from 5-8%.

To produce the integrated support, according to the invention, preferably, the injection molding method or injection molding with pressing - can be used. These methods are characterized by short production cycle and provide the final product, in this case the integrated support, of high dimensional tolerance, which does not require additional process procedures or stages such as e.g. the post-curing stage, with the exclusion of the embodiment of the integrated support with pressed in or screwed in threaded metal inserts 6 in the holes of the base 1 and/or the shelf 4.

In the simplest variant of the production process, the supports are manufactured in one stage by injection molding.

In a developed variant of the production process in which threaded metal inserts 6 are secured in the holes of the base 1 and/or the shelf 4 for fixing bolts, the assembly of the threaded metal inserts 6 is done either by overmolding them in the holes or by pressing or screwing them into the holes. In the case of overmolding of the threaded metal inserts 6, the inserts are placed in the mold form before the injection of the plastic material starts, and then they are overmolded by the injected material. In the second case, fist the integrated support is produced by the injection molding method, and then the threaded metal inserts 6 are pressed or screwed in the holes of the base 1 and/or the shelf 4 of the support.

Moreover, the injection molding methods or injection molding with pressing are characterized by a very good repeatability of the production process with a small number of rejects or waste, and by the ability to process a wide range of materials.

In preferred embodiments of the integrated support shown in fig. 1-7, the supports are produced of a thermoplastic material by the injection molding method. The achieved production cycle times are between a few and a few dozen seconds. However, known supports are most often made of epoxy resins, which belong to a group of thermosetting materials and are characterized by long production cycle times. The full production cycle for an epoxy resin product takes from more than a dozen minutes to more than a dozen hours. In addition, when casting elements of epoxy resin, the production process is multi-stage and requires a large quantity of equipment and additional operation by the operator. After the stage of filling the mold cavity with epoxy resin and after its pre-hardening in the mold, there follows a lengthy state of post-curing conducted in furnaces at high temperatures.

The integrated support according to the present invention has a design which permits the use of environment-friendly materials such as thermoplastic materials. Another and basic advantage of thermoplastic materials compared to the presently used thermosetting materials is that they can be reused. After remelting thermoplastic materials in high temperature, they can be reused. If the material loses its properties as a result of, for instance, a long-lasting use, the thermoplastic can be repolymerized to restore its original properties.

As has been already mentioned, all the walls or partitions of the integrated support according to the present invention are less than 6 mm thick, which is possible thanks to the design of the present support and thanks to the use of materials and methods not used so far in the process of support manufacturing. As a result, the present integrated support of a thermoplastic material has thin walls less than 6 mm thick.

Therefore such an integrated support has a considerably smaller mass and volume, which results in smaller CO₂ emission both in the process of producing the raw material needed to manufacture one support and during its transport.

Additionally, due to a much shorter production cycle based on the injection method as compared with the production cycle based on epoxy resin casting, less energy is used and hence less CO₂ is emitted to the atmosphere during the production of the integrated support according to the invention.

As has been already mentioned, thanks to the use of the shelf 4 which is common for all electric phases and which joins the tubular parts 2 of the cover 3 at the selected distance to the base 1 and at one height of the tubular parts 2, the integrated support according to the present invention features high mechanical strength during the Short-Time Withstand Current test compared with known supports which have non-integrated shelves separate for each of their cylindrical parts.

STC test (Short-Time Withstand Current test) is one of the tests that has to be conducted before a new product is marketed. It is a standard test conducted according to IEC 62271-1 item 6.6, Edition 1.0, 2007-10. The integrated support according to the invention passed the required STC test for a short-circuit load of a root-mean-square value of 31.5 kA, peak current 83 kA, and duration of 1 second.

To verify the increase in the mechanical strength of the integrated support according to the invention in comparison with known supports, a special device was designed and made to enable the installation of the integrated support according to the invention on a universal testing machine, and then its loading in a way approximating the conditions during the STC test. During this test, the integrated support according to the invention was fixed vertically and attached to the holder of the device fixed to the base of the universal testing machine. Loading was effected through a special angular beam attached to the integrated support at the place where the buses are normally fixed.

STC tests of thermoplastic prototypes of the new integrated support according to the invention conducted at a temperature of 95°C showed more than twofold increase in strength as compared to a known support made of polyester resin.

## Claims

1. Integrated support for fixing electrical buses in a medium-voltage distribution switchgear, **characterized in that** it comprises:
a base (1) with areas for fixing the support to a wall of the casing of medium-voltage distribution switchgear,
at least three tubular parts (2) extending from the base (1) and forming a cover (3) for the buses, each tubular part (2) with an internal and longitudinally extending phase compartment (2a) for one of the phases, and
a shelf (4) common for all tubular parts (2) and connecting all the tubular parts (2) with one another at a predetermined distance from the base (1), while
on one side, the one that is more distant from the base (1), the shelf (4) has fixing surfaces (4a), one in each tubular part (2), with ports for bolts for fixing the buses, and on the other side of the shelf (4), the one closer to the base (1), partition walls (5) are formed between the phase compartments (2a).

2. The integrated support according to claim 1, **characterized in that** the cover (3) contains three tubular parts (2) which extend perpendicularly from the base (1).

3. The integrated support according to claim 1 or 2, **characterized in that** the base (1) has a rectangular contour in top view and the tubular parts (2) are arranged in a line one after the other along the longer side of the base (1), each tubular part (2) having on a part of its circumference and along the longer side of the base (1) a hole (2b) extending from the upper edge of the tubular part (2) towards the base (1) to the shelf (4) fixing area (4a), forming partly open parts of upper phase compartments (2a), and below the holes (2b) in the tubular parts (2) the cover (3) has a flat wall extending to the base (1) and between the tubular parts (2).

4. The integrated support according to claim 3, **characterized in that** on the side opposite the holes (2b) in the tubular parts (2) and below the shelf (4), the cover (3) has a flat wall extending to the base (1) between the tubular parts (2), which wall joins the tubular parts (2) with one another.

5. The integrated support according to any of the previous claims, **characterized in that** the tubular part (2) has a basically circular contour in cross-section.

6. The integrated support according to any of the previous claims, **characterized in that** to increase rigidity and mechanical strength, the shelf (4) has, preferably on the side closer to the base (1), reinforcing elements, preferably ribbing (4b).

7. The integrated support according to any of the previous claims, **characterized in that** the base (1) has ports for fixing bolts in the areas of fixing to the wall of the casing of a medium-voltage distribution switchgear.

8. The integrated support according to any of the previous claims, **characterized in that** to increase rigidity and mechanical strength, in the areas of fixing to the wall of the casing of a medium-voltage distribution switchgear, the base (1) has reinforcing elements, preferably ribbing (1b).

9. The integrated support according to any of the previous claims, **characterized in that** it has threaded inserts (6) in the shelf holes (4) and/or in the base (1) holes.

10. The integrated support according to any of the previous claims, **characterized in that** it is made of a thermoplastic material, preferably reinforced with fibers or non-filled, such as PA, PPA, PET, PBT, PPS or PES, more preferably selected from a group of thermoplastic materials of a higher mechanical strength.

11. The integrated support according to any of the previous claims, **characterized in that** it is produced using the injection molding method or injection molding with pressing.

12. The integrated support according to claim 10, **characterized in that** it is produced in a single manufacturing stage.

13. The integrated support according to claim 9 to 11, **characterized in that** its production cycle lasts from a few seconds to several dozen seconds.

14. The integrated support according to claim 9 do 12, **characterized in that** all walls present in the support structure are less than 6 mm thick.
